# NEUE EUROPÄISCHE PATENTSCHRIFT

(11) **EP 1 831 583 B2**
(45) Veröffentlichungstag und Bekanntmachung des Hinweises auf die Entscheidung über den Einspruch: **04.12.2013**
(45) Hinweis auf die Patenterteilung: 09.02.2011
(21) Anmeldenummer: 05821163.2
(22) Anmeldetag: 16.11.2005
(51) Int. Cl.: F16F 9/05

(54) **LUFTFEDER-DÄMPFER-MODUL**
PNEUMATIC SPRING/DAMPER MODULE
MODULE DE RESSORT-AMORTISSEUR HYDRAULIQUE

(30) Priorität: 16.12.2004 DE 102004060466
(43) Veröffentlichungstag der Anmeldung: 12.09.2007
(73) Patentinhaber: ContiTech Luftfedersysteme GmbH, 30165 Hannover (DE)
(72) Erfinder: STAHMER, Reinhard, 30823 Garbsen (DE)
(74) Vertreter: Finger, Karsten
(86) Internationale Anmeldenummer: PCT/EP2005/012275
(87) Internationale Veröffentlichungsnummer: WO 2006/063646

(56) Entgegenhaltungen:
- DE-A1- 4 426 243
- DE-A1- 10 359 729
- DE-A1- 19 959 839
- DE-C1- 10 111 242
- GB-A- 986 327

## Beschreibung

Die Erfindung betrifft ein Luftfeder-Dämpfer-Modul, umfassend
- einen Stoßdämpfer
   - mit einem Außenrohr mit einem Verschluss an einem in Einbaulage nach oben weisenden oberen Ende des Stoßdämpfers,
   - mit einem vom oberen Ende des Stoßdämpfers beabstandeten, auf dem Außenrohr fixierten Ringflansch und
   - mit einer Dämpferstange,
- einen auf dem oberen Ende des Stoßdämpfers angeordneten Abrollkolben
   - mit einem Kolbendeckel mit einer äußeren und einer inneren Oberfläche und
   - mit einem Kolbenboden mit einer zentrischen Öffnung
- einen auf dem Abrollkolben angeordneten und fixierten Luftfederbalg mit einer dem Abrollkolben zugeordneten und einer dem Abrollkolben abgewandten Öffnung,
- eine den Luftfederbalg an der vom Abrollkolben abgewandten Öffnung verschließende Verschlussplatte,
- einen im Inneren des Luftfederbalges angeordneten Anschlagpuffer aus elastomerem Werkstoff,
wobei der Abrollkolben mit der Öffnung im Kolbenboden über das obere Ende des Stoßdämpfers gestülpt ist und der Kolbenboden sich über den Ringflansch auf dem Außenrohr des Stoßdämpfers abstützt, wobei auf der dem Anschlagpuffer abgewandten inneren Oberfläche des Kolbendeckels zentrisch ein Rohr fixiert ist, das in montiertem Zustand um den Stoßdämpfer herumgreift und sich auf dem Ringflansch des Stoßdämpfers abstützt, wie z.B. aus der DE 199 59 833 A1 bekannt.

Derartige Luftfeder-Dämpfer-Module sind vorwiegend als Federbeine an der Vorderachse in Nutzfahrzeugen im Einsatz. Durch die koaxiale, ineinander gesteckte Anordnung von Luftfeder und Stoßdämpfer in einem Luftfeder-Dämpfer-Modul lässt sich der notwendige Einbauraum für die Federung und Dämpfung im Nutzfahrzeug verringern, was einer breiteren Federspur und einem größeren Lenkwinkel zugute kommt. Der Luftfederbalg mit Verschlußplatte und Abrollkolben wirkt dabei wie eine an sich bekannte Luftfederung, das Wirkprinzip des Stoßdämpfers entspricht ebenfalls dem bekannten Stand der Technik. Dabei sind die Stoßdämpfer häufig an ihrem in Einbaulage nach oben weisenden Ende mit einer Verschlussplatte verschlossen. Diese wird beispielsweise durch eine Verrollung des Außenrohres des Stoßdämpfers nach innen über die Platte dicht in Position gehalten. Die Dämpferstange ist gegen die Verschlussplatte mit einer Dichtung abgedichtet. Die Verrollung ist eine rein formschlüssige Verbindung von Außenrohr und Verschlussplatte. Sie ist deshalb gegen Biegewechselbeanspruchung und plastische Verformung besonders empfindlich.

Bei einer typischen Ausführungsform derartiger Luftfeder-Dämpfer-Module weist der Kolbenboden einen Stützflansch auf, der an oder in der Öffnung des Kolbenbodens angeordnet ist und sich im montierten Zustand auf dem Ringflansch des Stoßdämpfers abstützt. Außerdem weist der Abrollkolben meist zusätzlich eine Pufferstütze auf, die innerhalb des Abrollkolbens über das obere Ende des Stoßdämpfers gestülpt ist und sich ebenfalls über den Stützflansch des Kolbenbodens auf dem Ringflansch des Stoßdämpfers abstützt. Der Anschlagpuffer oder eine Zusatzfeder, die in oder an der Verschlussplatte des Luftfederbalges angeordnet sind, schlägt, beispielsweise im Falle eines Durchschlagens der Luftfeder, auf einer am oberen Ende der Pufferstütze fixierten Prallplatte auf. Diese Konstruktion dient dazu, den Abrollkolben bei großen Lasten vor zu starker Verformung und die Verrollung des Stoßdämpfers vor zu großen Lasten zu schützen. Nachteilig dabei ist, dass derartige Abrollkolben aufwendig, schwer und dementsprechend kostenintensiv sind.

Die DE 197 55 549 C2 beschreibt ein Luftfeder-Dämpfer-Modul, bei dem der Abrollkolben plan auf dem oberen Ende des Stoßdämpfers aufliegt. Die gesamte Federkraft und im Falle eines Kontaktes des Anschlagpuffers mit dem Kolbendeckel auch die gesamte Pufferkraft stützt sich also auf dem oberen Ende des Stoßdämpfers und der dort angeordneten Verrollung des Außenrohres ab. Ein Ringflansch am Außenrohr ist hier nicht vorhanden. Bei dieser Lösung ist der Verschluss des Außenrohres des Stoßdämpfers sehr hohen Belastungen ausgesetzt. Ist der Verschluss als Verrollung ausgebildet, kommt es wegen der besonderen Empfmdlichkeit der Verrollung gegenüber mechanischen Beschädigungen oder Biegewechselbeanspruchung leicht zu Undichtigkeiten und abnehmender Dämpferleistung.

Die DE 100 24 983 C1 zeigt eine Lösung, bei der der Abrollkolben vom oberen Ende des Stoßdämpfers beabstandet in nicht näher bezeichneter Weise fixiert ist und die Pufferkraft durch eine Schutzabdeckung auf dem verrollten Ende des Stoßdämpfers abgefangen wird. Damit die Schutzabdeckung sich im Betrieb nicht löst und um den Kontakt mit der Verrollung des Außenrohres zuverlässig zu verhindern, muss die Schutzabdeckung fest mit dem Außenrohr verbunden sein. In der vorgeschlagenen Lösung ist die Montage der Schutzabdeckung auf das Außenrohr erst nach der Montage des Abrollkolbens am Stoßdämpfer möglich. Eine Demontage des Stoßdämpfers, beispielsweise zum Austausch, ist hier durch die fest angebrachte Schutzabdeckung stark erschwert oder unmöglich.

Der Erfindung liegt die Aufgabe zugrunde, ein konstruktiv vereinfachtes Luftfeder-Dämpfer-Modul der eingangs geschilderten Art zu schaffen, bei dem bei leichter Montier-und Demontierbarkeit von Abrollkolben und Stoßdämpfer der Verschluss des Stoßdämpfers vom Abrollkolben auch bei hohen Belastungen nicht berührt wird.

Diese Aufgabe wird dadurch gelöst, dass die innere Oberfläche des Kolbendeckels und der Verschluss des Stoßdämpfers durch einen Spalt so beabstandet sind, dass beim Auftreffen des Anschlagpuffers auf die als Pufferanschlagsfläche ausgebildete äußere Oberfläche des Kolbendeckels die Pufferkraft über das Rohr und den Ringflansch in den Stoßdämpfer geleitet wird.

Durch die Abstützung des Rohres auf dem Ringflansch des Stoßdämpfers bleibt der Verschluss des Stoßdämpfers in allen Belastungsfällen von Kräften der Luftfeder frei. Insbesondere wenn der Verschluss des Stoßdämpfers mit einer Verrollung ausgebildet ist, gewährleistet diese Lösung eine größtmögliche Schonung dieser Verrollung. Durch die geeignete Wahl des Innendurchmessers des Rohres wird eine stabile Abstützung des Kolbens gegen Querkräfte erreicht. Außerdem kann ein Teil der Luftfedertragkräfte im Betrieb über das Rohr direkt auf den Stoßdämpfer abgeleitet werden und so die empfindliche Konstruktion aus Kolbenmantel und -boden entlasten.

In einer weiteren Ausbildung der Erfindung ist das Rohr in seiner axialen Ausdehnung so bemessen, dass es in montiertem, unbelasteten Zustand des Abrollkolbens in Einbaulage nach unten aus der Öffnung des Kolbenbodens um ein derart vorbestimmtes Maß herausragt, dass zwischen Kolbenboden und Ringflansch ein Spalt verbleibt und der Kolbenboden erst durch die Betriebsbelastung der Luftfeder auf dem Ringflansch zum Anliegen kommt.

Vorteile dieser Anordnung sind die Vermeidung einer Doppelpassung sowie von Relativbewegungen des Rohres zum Stoßdämpfer.

In einer weiteren Ausbildung der Erfindung ist das Innenvolumen des Abrollkolbens über mindestens eine Öffnung in Kolbendeckel oder Rohr mit dem Innenvolumen des Luftfederbalges verbunden.

Der Vorteil dieser Anordnung ist eine weichere Federcharakteristik der Luftfeder.

Eine weitere Ausbildung der Erfindung ist dadurch gekennzeichnet, dass der Kolbendeckel mindestens teilweise als konkave Pufferanschlagfläche so ausgebildet ist, dass beim Auftreffen des Anschlagpuffers auf die Pufferanschlagfläche Abrollkolben und Anschlagpuffer zentrisch zueinander ausgerichtet sind.

Der Vorteil dieser Anordnung liegt darin, dass der Anschlagpuffer durch die konkave Pufferanschlagfläche geführt wird. Dadurch ist die Gefahr des Ausknickens des Luftfeder-Dämpfer-Moduls, beispielsweise durch außermittige Belastungen, reduziert.

Anhand der Zeichnung wird nachstehend ein Ausführungsbeispiel der Erfindung näher erläutert.

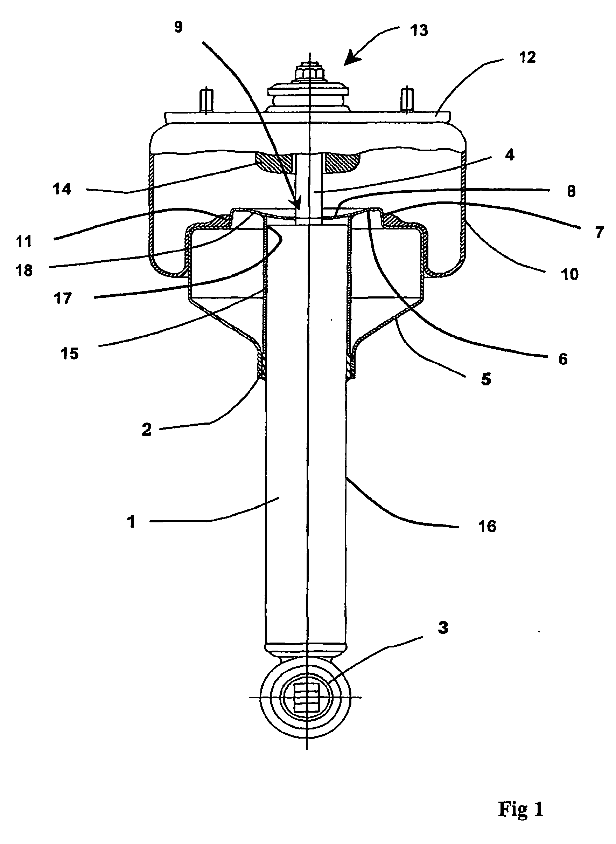

Das in Fig. 1 gezeigte Luftfeder-Dämpfer-Modul weist einen Stoßdämpfer 1 mit einem Ringflansch 2, ein Auge 3 zur Befestigung des Stoßdämpfers 1 an einem Fahrwerk einer Nutzfahrzeugkarosserie und eine Dämpferstange 4 auf. Das Fahrwerk und die Nutzfahrzeugkarosserie sind hier nicht gezeigt. Auf dem oberen Ende des Stoßdämpfers 1 ist ein Abrollkolben 5 aufgesetzt, der sich auf dem Ringflansch 2 abstützt. Der Abrollkolben 5 weist einen Kolbendeckel 6 auf. Zentrisch im Kolbendeckel 6 ist ein Konussitz 7 angeordnet, wobei der Konussitz 7 eine ins Kolbeninnere konkav gewölbte gelochte Pufferanschlagfläche 8 aufweist. Durch das Loch 9 ist die Dämpferstange 4 durch die Pufferanschlagfläche 8 hindurchgeführt.

Auf dem Konussitz 7 ist ein Luftfederbalg 10 aufgesetzt, der auf dem Abrollkolben 5 abrollt und mit einem Dichtwulst 11 eine luftdichte Verbindung zwischen Abrollkolben 5 und Luftfederbalg 10 bildet. Der Luftfederbalg 10 ist an seinem oberen Ende mit einer Verschlussplatte 12 luftdicht verschlossen. Mittig in der Verschlussplatte 12 ist ein Stoßdämpferlager 13 angeordnet, an dem die Kolbenstange 4 des Stoßdämpfers 1 festgeschraubt ist. An der Verschlussplatte 12 ist außerdem ein in das Innere des Luftfederbalges 10 weisender Anschlagpuffer 14 befestigt. Der Anschlagpuffer dient dazu, bei hohen Belastungen des Luftfeder-Dämpfer-Moduls einen direkten Kontakt der Verschlussplatte 12 mit dem Abrollkolben 5 zu verhindern. Federt der Luftfederbalg 10 über die betriebsgemäße Einfederung hinaus ein, trifft der Anschlagpuffer 14 auf die Pufferanschlagfläche 8 des Abrollkolbens 5. Im Abrollkolben 5 ist an der inneren Oberfläche der Pufferanschlagfläche 8 ein Rohr 15 angeschweißt. Das Rohr 15 greift um ein Außenrohr 16 des Stoßdämpfers 1 herum und ist von diesem radial im Umfang beabstandet. Die Länge des Rohres ist so bemessen, dass es in unbelastetem Zustand axial spielfrei zwischen der inneren Oberfläche der Pufferanschlagfläche 8 und dem Ringflansch 2 sitzt. Trifft der Anschlagpuffer 14 der Verschlussplatte 12 auf die Pufferanschlagfläche 8 auf, wird die Pufferkraft über das Rohr 15 und den Ringflansch 2 in den Stoßdämpfer 1 geleitet. Eine Verrollung 17 des Stoßdämpfers 1 bleibt dadurch bei allen Belastungsfällen von aus der Luftfeder eingeleiteten Kräften frei. Die Verbindungsöffnung 18 sorgt für eine Verbindung der Innenvolumina des Abrollkolbens 5 und des Luftfederbalges 10.

### Bezugszeichenliste

### (Teil der Beschreibung)

- 1: Stoßdämpfer
- 2: Ringflansch
- 3: Befestigungsauge
- 4: Dämpferstange
- 5: Abrollkolben
- 6: Kolbendeckel
- 7: Konussitz
- 8: Pufferanschlagfläche
- 9: Zentrische Öffnung in der Pufferanschlagfläche 8
- 10: Luftfederbalg
- 11: Dichtwulst des Luftfederbalges 10
- 12: Verschlussplatte
- 13: Stoßdämpferlager
- 14: Anschlagpuffer
- 15: Rohr
- 16: Außenrohr des Stoßdämpfers 1
- 17: Verrollung
- 18: Verbindungsöffnung

## Patentansprüche

1. Luftfeder-Dämpfer-Modul, umfassend
- einen Stoßdämpfer (1)
- mit einem Außenrohr (16) mit einem Verschluss (17) an einem in Einbaulage nach oben weisenden oberen Ende des Stoßdämpfers (1),
- mit einem vom oberen Ende des Stoßdämpfers (1) beabstandeten, auf dem Außenrohr (16) fixierten Ringflansch (2) und
- mit einer Dämpferstange (4)
- einen auf dem oberen Ende des Stoßdämpfers (1) angeordneten Abrollkolben (5)
- mit einem Kolbendeckel (6) mit einer äußeren und einer inneren Oberfläche und
- mit einem Kolbenboden mit einer zentrischen Öffnung,
- einen auf dem Abrollkolben (5) angeordneten und fixierten Luftfederbalg (10) mit einer dem Abrollkolben (5) zugeordneten und einer dem Abrollkolben (5) abgewandten Öffnung,
- eine den Luftfederbalg (10) an der dem Abrollkolben (5) abgewandten Öffnung verschließende Verschlussplatte (12),
- einen im Inneren des Luftfederbalges (10) angeordneten Anschlagpuffer (14) aus elastomerem Werkstoff,
wobei der Abrollkolben (5) mit der Öffnung im Kolbenboden über das obere Ende des Stoßdämpfers (1) gestülpt ist und der Kolbenboden sich über den Ringflansch (2) auf dem Außenrohr (16) des Stoßdämpfers (1) abstützt, wobei auf der dem Anschlagpuffer (14) abgewandten inneren Oberfläche des Kolbendeckels (6) zentrisch ein Rohr (15) fixiert ist, das in montiertem Zustand um den Stoßdämpfer (1) herumgreift und sich auf dem Ringflansch (2) des Stoßdämpfers abstützt, **dadurch gekennzeichnet,**
**dass** die innere Oberfläche des Kolbendeckels (6) und der Verschluss (17) des Stoßdämpfers (1) durch einen Spalt so beabstandet sind, dass beim Auftreffen des Anschlagpuffers (14) auf die als Pufferanschhgsfläche (8) ausgebildete äußere Oberfläche des Kolbendeckels (6) die Pufferkraft uber das Rohr (15) und den Ringflansch (2) in den Stoßdämpfer (1) geleitet wird.

2. Luftfeder-Dämpfer-Modul nach Anspruch 1, **dadurch gekennzeichnet, dass** das Rohr (15) in seiner axialen Ausdehnung so bemessen ist, dass es in montiertem, unbelasteten Zustand des Abrollkolbens (5) in Einbaulage nach unten aus der Öffnung des Kolbenbodens um ein derart vorbestimmtes Maß herausragt, dass zwischen Kolbenboden und Ringflansch (2) ein Spalt verbleibt und der Kolbenboden erst durch die normale Betriebsbelastung der Luftfeder auf dem Ringflansch (2) zum Anliegen kommt.

3. Luftfeder-Dämpfer-Modul nach Anspruch 1, **dadurch gekennzeichnet, dass** das Innenvolumen des Abrollkolbens (5) über mindestens eine Öffnung (18) in Kolbendeckel (6) oder Rohr (15) mit dem Innenvolumen des Luftfederbalges (10) verbunden ist.

4. Luftfeder-Dämpfer-Modul nach Anspruch 1, **dadurch gekennzeichnet, dass** der Kolbendeckel (6) mindestens teilweise als zentrische konkave Pufferanschlagfläche (8) so ausgebildet ist, dass beim Auftreffen des Anschlagpuffers (14) auf die Pufferanschlagfläche (8) Abrollkolben (5) und Anschlagpuffer (14) zentrisch zueinander ausgerichtet sind.

## Claims

1. Air spring shock absorber module, comprising
- a shock absorber (1),
- having an external pipe (16) with a closure (17) at an upper end of the shock absorber (1) pointing upward in the installation position,
- having an annular flange (2) which is spaced apart from the upper end of the shock absorber (1) and is secured to the external pipe (16), and
- having a shock absorber rod (4),
- a rolling piston (5) which is arranged on the upper end of the shock absorber (1),
- having a piston cover (6) with an external and an internal surface), and
- having a piston head with a central opening,
- an air spring bellows (10) which is arranged and secured on the rolling piston (5) and has an opening which is assigned to the rolling piston (5) and faces away from the rolling piston (5),
- a closure plate (12) which closes off the air spring bellows (10) at the opening facing away from the rolling piston (5),
- a stop buffer (14) which is arranged in the interior of the air spring bellows (10) and is composed of elastomer material,
wherein the rolling piston (5) is pushed with the opening in the piston head over the upper end of the shock absorber (1) and the piston head is supported by means of the annular flange (2) on the external pipe (16) of the shock absorber (1), wherein a pipe (15) is secured centrally on the inner surface of the piston cover (6) facing away from the stop buffer (14), said pipe (15) engaging, in the mounted state, around the shock absorber (1) and being supported on the annular flange (2) of the shock absorber, **characterized in that** the internal surface of the piston cover (6) and the closure (17) of the shock absorber (1) are spaced apart by a gap in such a way that when the stop buffer (14) impacts on the external surface, embodied as a buffer stop surface (8), of the piston cover (6), the buffer force is conducted into the shock absorber (1) via the pipe (15) and the annular flange (2).

2. Air spring shock absorber module according to Claim 1, **characterized in that** the pipe (15) is dimensioned in its axial extent in such a way that in the mounted, unloaded state of the rolling piston (5) in the installation position said pipe (15) protrudes downwards out of the opening in the piston floor by a predetermined amount such that a gap remains between the piston floor and the annular flange (2), and the piston floor comes to bear on the annular flange (2) only as a result of the normal operational loading of the air spring.

3. Air spring shock absorber module according to Claim 1, **characterized in that** the internal volume of the rolling piston (5) is connected to the internal volume of the air spring bellows (10) via at least one opening (18) in the piston cover (6) or in the pipe (15).

4. Air spring shock absorber module according to Claim 1, **characterized in that** the piston cover (6) is embodied at least partially as a central concave buffer stop face (8) in such a way that when the stop buffer (14) impacts against the buffer stop face (8) the rolling piston (5) and the stop buffer (14) are oriented centrally with respect to one another.

## Revendications

1. Module d'amortissement pneumatique, comprenant :
- un amortisseur (1),
- avec un tube extérieur (16) comprenant une fermeture (17) sur une extrémité supérieure de l'amortisseur (1) tournée vers le haut dans la position de montage,
- avec une bride annulaire (2) fixée sur le tube extérieur (16) à distance de l'extrémité supérieure de l'amortisseur (1), et
- avec une tige d'amortisseur (4),
- un piston de déroulage (5) disposé à l'extrémité supérieure de l'amortisseur (1),
- avec un couvercle de piston (6) pourvu d'une surface extérieure et d'une surface intérieure, et
- avec un fond de piston muni d'une ouverture centrale,
- un soufflet pneumatique (10) disposé et fixé sur le piston de déroulage (5), avec une ouverture associée au piston de déroulage (5) et une ouverture opposée au piston de déroulage (5),
- une plaque de fermeture (12) fermant le soufflet pneumatique (10) au niveau de l'ouverture opposée au piston de déroulage (5),
- un tampon de butée (14) disposé à l'intérieur du soufflet pneumatique (10) et constitué d'un matériau élastomère,
le piston de déroulage (5) avec l'ouverture dans le fond de piston étant recourbé par-dessus l'extrémité supérieure de l'amortisseur (1) et le fond de piston s'appuyant par le biais de la bride annulaire (2) sur le tube extérieur (16) de l'amortisseur (1), un tube (15) étant fixé centralement sur la surface intérieure du couvercle de piston (6) opposée au tampon de butée (14), lequel, dans l'état monté, vient en prise autour de l'amortisseur (1) et s'appuie sur la bride annulaire (2) de l'amortisseur, **caractérisé en ce que** la surface intérieure du couvercle de piston (6) et la fermeture (17) de l'amortisseur (1) sont séparées par une fente de telle sorte que, lors de l'impact du tampon de butée (14) sur la surface extérieure du couvercle de piston (6) réalisée sous forme de surface de butée de tampon (8), la force de tampon soit transmise par le biais du tube (15) et de la bride annulaire (2) à l'amortisseur (1).

2. Module d'amortissement pneumatique selon la revendication 1, **caractérisé en ce que** le tube (15) est dimensionné dans son étendue axiale de telle sorte que dans l'état monté, non sollicité, du piston de déroulage (5), dans la position d'installation, il fasse saillie vers le bas hors de l'ouverture du fond de piston d'une dimension prédéterminée de telle sorte qu'entre le fond de piston et la bride annulaire (2), il subsiste une fente et que le fond de piston vienne d'abord en appui sur la bride annulaire (2) par la sollicitation fonctionnelle normale du ressort pneumatique.

3. Module d'amortissement pneumatique selon la revendication 1, **caractérisé en ce que** le volume intérieur du piston de déroulage (5) est connecté par le biais d'au moins une ouverture (18) dans le couvercle de piston (6) ou le tube (15) est connecté au volume intérieur du soufflet pneumatique (10).

4. Module d'amortissement pneumatique selon la revendication 1, **caractérisé en ce que** le couvercle de piston (6) est réalisé au moins en partie sous forme de surface de butée de tampon centrale concave (8) de telle sorte que lors de l'impact du tampon de butée (14) sur la surface de butée de tampon (8), le piston de déroulage (5) et le tampon de butée (14) soient orientés centralement l'un par rapport à l'autre.
